# EUROPEAN PATENT SPECIFICATION

(11) **EP 0 731 927 B1**
(45) Date of publication and mention of the grant of the patent: **12.05.1999**
(21) Application number: 95904173.2
(22) Date of filing: 01.12.1994
(51) Int. Cl.: G01V 1/28

(54) **METHOD FOR INPUTTING AND LOAD BALANCING SEISMIC DATA FOR SEISMIC PROCESSING ON A MULTIPROCESSOR COMPUTER**
VERFAHREN ZUR EINGABE UND ZUM LASTENAUSGLEICH VON SEISMISCHEN DATEN FÜR SEISMISCHE VERARBEITUNG IN EINEM MULTIPROZESSORDATENVERARBEITUNGSSYSTEM
PROCEDE D'INTRODUCTION DE DONNEES SISMIQUES ET D'EQUILIBRAGE DU VOLUME DE CALCUL DE CES DONNEES A DES FINS DE TRAITEMENT SUR UN ORDINATEUR MULTIPROCESSEUR

(30) Priority: 01.12.1993 US 160123
(43) Date of publication of application: 18.09.1996
(73) Proprietor: SCHLUMBERGER TECHNOLOGY CORPORATION, Austin, TX 78720-0015 (US)
(72) Inventor: SHOEN, Eric, J., Austin, TX 78703 (US)
(74) Representative: Stoole, Brian David
(86) International application number: PCT/US94/13704
(87) International publication number: WO 95/15506

(56) References cited:
- WO-A-93/13434
- GB-A- 2 236 393
- THE LEADING EDGE, vol. 12,no. 6, June 1993 pages 687-692, S. REYNOLDS 'Parallel processing in seismic data processing'
- COMMUNICATIONS OF THE ACM, vol. 36,no. 11, December 1993 pages 31-40, W. DANIEL HILLIS ET AL 'The CM-5 connection machine: a scalable supercomputer ' cited in the application
- GEOPHYSICS, vol. 58,no. 7, July 1993 pages 1030-1041, H.A. MEINARDUS ET AL '3-D time-variant dip moveout by the f-k method' cited in the application
- GEOPHYSICS, vol. 56,no. 8, August 1991 pages 1158-1163, M. RESHEF 'Prestack depth imaging of three-dimensional shot gathers '

## Description

### TECHNICAL FIELD

This invention relates to seismic data processing on multiprocessor computers. In particular, the present invention relates to a method of inputting prestack seismic data for processing on a multiprocessor computer. A preferred form of the current invention relates to a method of balancing the computational load of Kirchhoff-style seismic migration processing across multiple processors on a multiprocessor computer.

### BACKGROUND OF THE INVENTION

### Seismic Acquisition & Processing

The Earth's subsurface can be imaged by a seismic survey, therefore, seismic data acquisition and processing are key components in geophysical exploration. In a seismic survey, elastic acoustic waves are generated by a source at the Earth's surface and the waves are radiated into the Earth's subsurface. For land seismic surveys, the usual source is dynamite or a seismic vibrator, while for a marine seismic survey the source is typically an airgun array.

As the waves radiate downward through the Earth's subsurface, they reflect and propagate upwards towards the surface whenever the subsurface medium changes. The upward reflections are detected by a number of receivers and the reflected data recorded and processed in order to image the subsurface. Interpretation of these acoustic images of the subsurface formation leads to the structural description of the subsurface geological features, such as faults, salt domes, anticlines, or other features indicative of hydrocarbon traps.

While two dimensional ("2D") seismic surveys have been conducted since the 1920's, three dimensional ("3D") seismic surveys have only recently become widely used. 3D surveys more accurately reflect the subsurface positions of the hydrocarbon traps, but are expensive and time consuming to acquire and process. For an offshore 3D data set covering a 20 x 20 km area, it costs about $3M dollars (1991 dollars) to acquire the data with another $1 M dollars for data processing to transform the raw data into usable images. Because the cost of such a seismic survey is considerably less than the cost of drilling an offshore oil well, 3D seismic surveys are often worth the investment.

One common type of seismic survey is a marine survey, performed by boats in offshore waters. To record seismic data, a boat tows airguns (seismic sources) near its stern, and an up to 5km long "streamer" containing hydrophones (seismic receivers) along its length. As the boat sails forward, it fires one source and receives a series of echoes into each seismic receiver. For each source-receiver pair, one prestack seismic trace is created. Each trace records sound waves that echo from abrupt acoustic impedance changes in rock beneath the ocean floor. Also recorded in a prestack trace, in a header section of the trace record, is information about the location of the source and receiver. See, K. M. Barry, D. A. Cavers, and C. W. Kneale, 1975. Recommended standards for digital tape formats. *Geophysics,* 40, 344-352. Reprinted in *Digital Tape Standards,* Society of Exploration Geophysicists. 1980. Prestack traces are not associated with any particular area of the survey. Each echo that appears in a prestack trace is caused by a reflector that lies somewhere along, and tangent to, an elliptical path whose foci are the seismic source and receiver.

The spatial relationship between sources and receivers in a land seismic acquisition scenario differs from that described above; however, the present invention is unaffected by this.

A seismic survey is performed over a bounded region of the earth. This region is generally, but not necessarily precisely, rectangular. The survey area is partitioned into an array of bins. "Binning" is the assignment of traces to a survey array-usually a 12.5 by 25 meter rectangle. Any particular bin is located by its Cartesian coordinates in this array (*i.e.,* by its row and column number). The ultimate output of the seismic survey is data that shows the location and strength of seismic reflectors in each bin, as a function of depth or time. This information cannot be deduced directly, but rather must be computed by applying numerous data processing steps to data recorded.

Although 3D marine surveys vary widely in size (1,000 to 100,000 km²), a typical marine survey might generate in excess of 40,000 data acquisition tapes. Data is accumulated at a staggering rate, about 1.5 million data samples every 10 seconds. A significant amount of time and money is spent in processing this enormous amount of data The result of the seismic survey is thus an enormous amount of raw data indicative of reflected signals which are a function of travel time, propagation, and reflection effects. The goal is to present the reflected amplitudes as a function of lateral position and depth.

A typical marine seismic survey goes through three distinct sequential stages - data acquisition, data processing, and data interpretation. Data processing is by far the most time consuming process of the three. The acquisition time for a medium to large 3D marine seismic survey is in the order of two months. In addition to seismic data, navigation information is also recorded for accurate positioning of the sources and receivers. The resulting digital data must be rendered suitable for interpretation purposes by processing the data at an onshore processing center. The processing sequence can be divided into the following five processing steps.
1. Quality Control, filtering and deconvolution. This processing is applied on a trace basis to filter noise, sharpen the recorded response, suppress multiple echoes, and generally improve the signal-to-noise ratio. Most of these signal processing operations can be highly vectorized.
2. Velocity analyses for migration. This processing estimates the velocity of the subsurface formations from the recorded data by modeling the propagation of acoustic waves with estimated velocities and checking for signal coherence in the acquired data. It is similar to migration but is applied to a small section of the data cube.
3. 3D dip moveout correction and stacking. This processing step, generally the most input/output intensive part of the processing, (i) sums together several traces in order to eliminate redundancy and increase the signal-to-noise ratio, (ii) corrects for time delays that occur when the reflected signal is recorded by successive hydrophones that are located increasingly farther away from the energy source, and (iii) positions and orients the stacked data in accordance with the navigation information. After this processing step, the data is referred to as stacked data. This step normally constitutes on the order of a 100 to 1 reduction in data volume.
4. Migration. This processing step, computationally the most intensive, relocates the position of reflected strata, that are recorded in time, to their correct position in depth.
5. Enhancement and filtering. This processing step is used to enhance the migrated data using digital filtering techniques.

The stacking process (step 3) reduces the amount of data to what is essentially a three dimensional array of numbers (i.e. a data cube) representing amplitudes of reflected seismic waves recorded over a period of time (usually 8 seconds). Such data cubes can be large, for example, a medium size 3D survey may produce cubes as large as 1000 x 1000 x 2000 of floating-point numbers.

The stacked data cube represents a surface recording of acoustic echoes returned from the earth interior and is not usually directly interpretable. The migration (or acoustic imaging process, step 4) is used to convert stacked data into an image or a map which can then be viewed as a true depth map cut out of the survey area.

Thus, migration is one of the most critical and most time consuming components in seismic processing is migration. Generally speaking, migration transforms the seismic data recorded as a function of time into data positioned as a function of depth using preliminary knowledge of the propagation velocities of the subsurface. In particular, migration moves dipping reflectors to their true subsurface position. Migration is typically performed on post stack seismic data to reduce the amount of processing time, but even so takes weeks of conventional supercomputer time for even medium size post stack seismic data cubes.

Many types of stacking and migration processes are well known. See, O. Yilmaz. 1987. *Seismic Data Processing.* Tulsa, Oklahoma: Society of Exploration Geophysicists. Usually, one poststack trace is associated with each bin. However, it is also possible to create multiple poststack traces per bin. For example, each such trace might contain contributions from prestack traces whose source-receiver separation falls within a specific range. (In this case, the bin is said to contain a common depth-point or common midpoint gather.)

Stacking programs create poststack data from prestack data by simple manipulation of prestack data. In general, a stacking program transforms each prestack trace exactly once. Migration programs create poststack data from prestack data by more complicated, computationally intensive, manipulation of the same data. Migration programs transform each prestack trace a large number of times, requiring commensurately more computation than simpler stacking programs. Multiple prestack traces are transformed and added together and superimposed to create the one or more poststack traces associated with a bin.

One such (partial) migration program is "3D Dip Moveout" (DMO) using the Kirchhoff method. See, U.S. Patent No. 5,198,979 Moorhead et al. See also, S. Deregowski and F. Rocca. 1981. Geometrical optics and wave theory for constant- offset sections in layered media. *Geophysical Prospecting,* 29, 374-387. DMO creates a poststack data set than can be input to another (full) migration program. Using the Kirchhoff approach to implement 3D Dip Moveout ("DMO"), a program transforms a prestack trace once for each bin that lies under a line drawn between the seismic source and receiver. This line is referred to as the "coverage" of the trace. Each transformed prestack trace is added, sample-by-sample, to incrementally create one or more the poststack traces in each bin. The signal-to-noise ratio of each poststack trace increases as the square root of the number of transformed prestack traces added together to form it.

Though efficient, the Kirchhoff approach is still computationally expensive. Approximately 30 arithmetic operations (floating-point operations, or FLOPs) are required for each sample of each transformed trace. Given an average shot-receiver separation of 3 kilometers, a bin width of 12.5 meters, and 8 seconds worth of data in each trace acquired at 4ms/sample, this implies an average of approximately 10 million FLOPs per trace. A typical 20 km square marine survey using 12.5 meter wide, 25 meter tall bins contains perhaps 80 million prestack traces. The DMO process using the Kirchhoff approach thus consumes approximately 800 trillion FLOPs. This computational expense motivates the implementation of migration programs such as DMO on some form of high-performance supercomputer, such as a massively parallel processor (MPP) See, Thinking Machines Corporation, 1993. *The Connection Machine CM-5 Technical Summary.* Such a processor is an attractive platform upon which to execute migration programs, because its performance scales up as its size increases; thus, the system can grow incrementally as the computation demand of the processing organization increases. See also, W. Daniel Hillis and Lewis W. Tucker, The CM-5 Connection Machine: A Scalable Supercomputer, *Communications of the ACM,* November 1993, Vol. 36, No. 11, pp 31-40.

### Parallel Computation

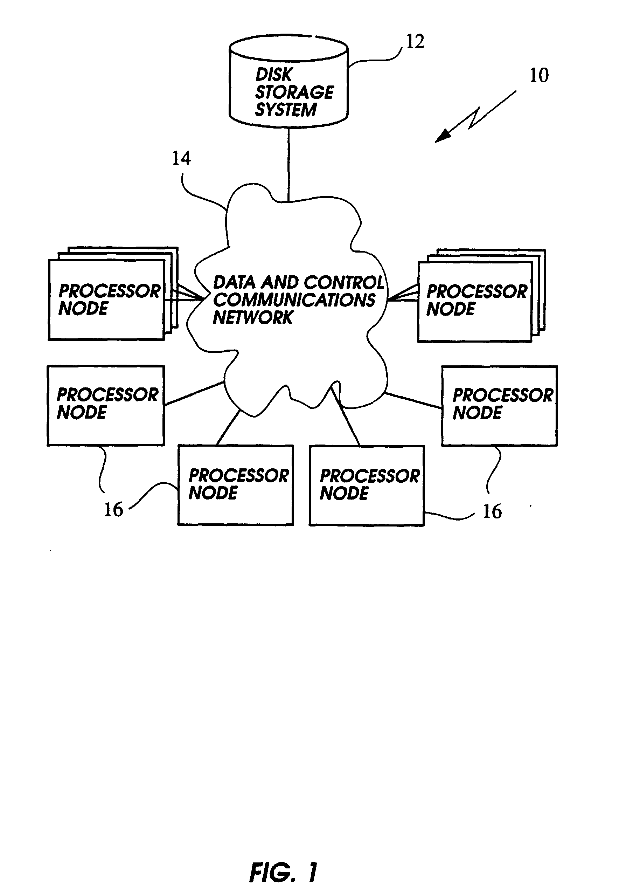

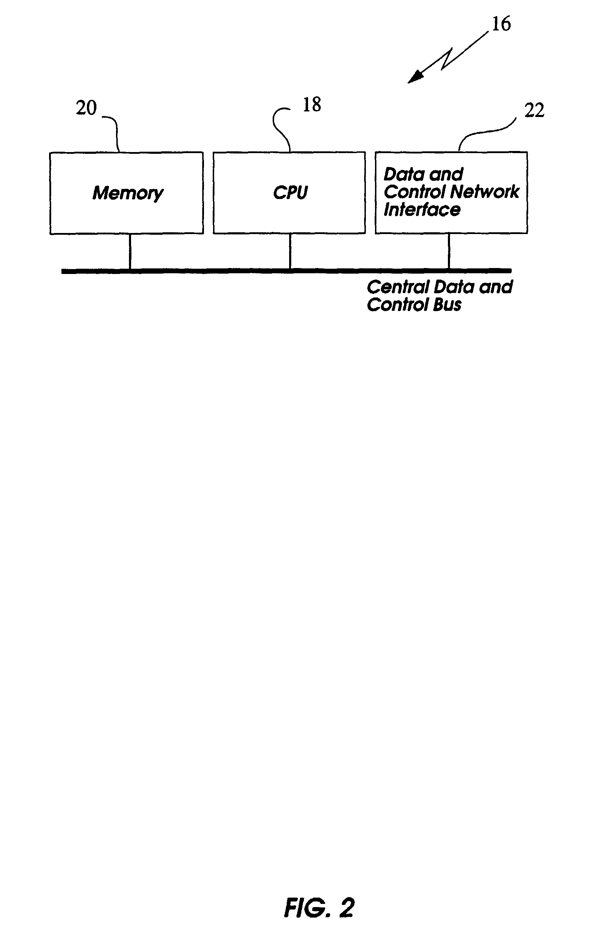

Figure 1 is an example of a multiprocessor parallel computer, specifically a massively parallel processor (MPP) such as the CM-5. In Figure 1, an MPP 10 consists of 3 major components: (*i*) a disk storage system 12 whose capacity and data transfer rate can be scaled up as storage and data throughput requirements demand, *(ii)* a data and control communications network 14 that ties together the processors and the disk storage system, and (*iii*) a set of processing nodes 16 (see Figure 2), each containing at least one processor 18, memory 20, and interface 22 to the data and control network 14. The capacity of the data network 14 (the amount of data it can transport in a given amount of time) scales as the number of nodes 16 increases. The size of the set of processing nodes 16 can be scaled up as computational requirements demand. On an MPP, processor nodes 16 can execute independently from one another; however, the control portion of the data and control communications network 14 provides a means by which all nodes 16 can synchronize their activities.

An MPP can improve the performance of computationally-intensive migration programs because it is possible to partition the work to be done and assign a part of it to each processor node 16. For this approach to scale as the size of the MPP 10 scales, the work partitions must be truly independent of one another, such that no two processors share work. This is an expression of Amdahl's Law, which states that the maximum parallelization speedup possible is the inverse of the fraction of time an application spends performing serial computation. See, G. Fox et al., 1988. *Solving Problems on Concurrent Processors,* Vol. 1, page 57.

For example, in seismic migration processing, each bin in the survey area must be assigned to one and only one processor at any one time. Any attempt to assign the same bin to more than a single processor would require a serializing synchronization to guarantee proper results. Because DMO moves a large amount of data, the means by which data is moved between the disk storage system 12 and the memories 20 of the processing nodes 16 is especially important. In order to avoid implications of Amdahl's Law, the data must be moved in parallel as efficiently as possible. One type of disk storage system that satisfies this requirement is a RAID disk system. See, S. J. Lo Verso, M. Isman, A. Nanopoulos, W. Nesheim, E. D. Milne, and R. Wheeler. SFS: A parallel file system for the CM-5. In *Proceedings of the 1993 Usenix Conference.*

Another implication of Amdahl' Law is that the work partitions must be designed so that all nodes are required to perform equal amounts of computation. This latter requirement is referred to as load balancing.

A straightforward partitioning is one that assigns nonoverlapping rectangular areas of bins to processors. This satisfies the independence requirement because each bin is independent of other bins. However, many, but not all, bins will be covered by a common prestack trace. Thus, it must be possible to efficiently input the same prestack trace, which is often stored on the disk storage system 12, to multiple processors. Each processor will then transform the trace slightly differently than the other processors, and add it to the developing poststack trace associated with the assigned bin.

Two obvious trace input strategies exist. The first inputs the same prestack trace to all processing nodes 16. In general, this is an inefficient use of an MPP. Often, many nodes 16 that receive the prestack trace are assigned to bins outside that trace's coverage. If a processing node 16 were to receive such a trace, it would simply ignore it and wait until it receives the next trace. The result is inefficient use of an MPP's processors, since many processors can waste time discarding traces.

A second strategy is to determine which traces cover which bins, and input from the disk storage system different traces into different processing nodes 16, such that only traces that cover a processing node's assigned bin is sent to that processor. Although this is efficient from the perspective of processor usage, it can be inefficient from the perspective of disk usage, because it creates contention as different processors attempt to read from different parts of the disk storage system at the same time. If the disk system is implemented as a single logical disk, as in a RAID disk system, different processing nodes 16 will be contending for control of the disk system 12 (*i.e.,* for control of the placement of the disk heads). This results in delays in moving data from the disk system 12 to processor memory 20.

If, by contrast, the disk system 12 is implemented as multiple disks, then there may be no contention, if each processing node 12 is reading from a separate disk. However, this disk architecture does not scale well. In general, this is implemented as a disk per processor, with fast access to the disk from the processor to which the disk is connected, and significantly slower access to the disk from other processors. See, Kendall Square Research, 1993. *Technical Summary.* In addition, the potential for contention for a single disk exists, if two or more processors try to read from the same disk.

Approaches are developing for applying parallel computation to seismic processing problems. See, U.S. Patent No. 5,198,979 Moorhead et al. and U.S. Patent No. 5,349,527.

### Kirchhoff DMO on a Multiprocessor

A scalable means to implement DMO on a multiprocessor computer is to: (*i*) load a set of prestack traces from the disk storage system 12 into the processing nodes 16, (*ii*) determine which bins in the survey area are covered by the union of all of the loaded traces, (*iii*) assign to each node 16 a portion of the survey area covered by the loaded traces, (*iv*) load from the disk system 12 into the appropriate nodes 16 the poststack traces from the covered bins, (*v*) apply the DMO operator to each loaded prestack trace in each processor to update the poststack traces, and (*vi*) write out the updated poststack traces from the nodes 16 to the disk system 12.

The assignment of portions of the survey area to the nodes 16 must be non-overlapping. This satisfies the independence requirement for scalability on an MPP because each bin is independent of other bins. This also permits a disk I/O strategy that allows the poststack traces to be read from and written to the disk storage system 12 in parallel. This is important, because each poststack trace will typically be read in, updated, and written out many times during the processing of a prestack data set. Thus, the organization of the file on the disk storage system containing the poststack data and the strategy with which the data is read and written can strongly impact the efficiency of the DMO process.

However, a simple non-overlapping partitioning of bins does not in itself guarantee good performance. For example, if each node is *a priori* assigned the same number of bins to process, this approach will not in general achieve good load balancing. This is especially true when marine seismic data is being processed, due to the geometry with which the data is acquired.

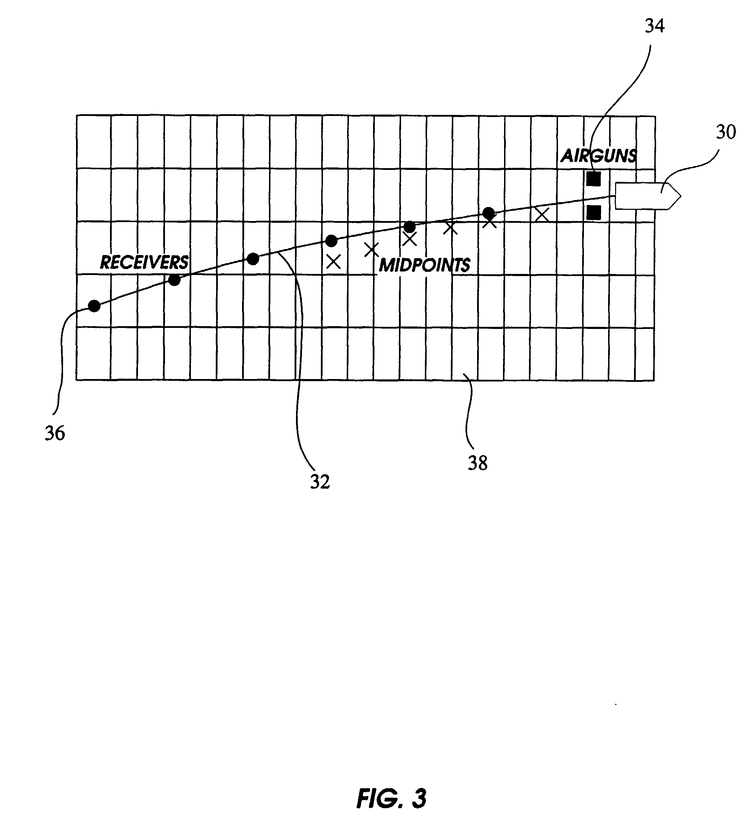

Figure 3 depicts a typical configuration of seismic sources and receivers in a marine seismic survey. A seismic acquisition vessel 30 sails forward towing a streamer cable 32 containing multiple seismic receivers 36 located at different points along the cable. Near the stern of the vessel is a pair of airguns 34, which are the seismic sources. With each firing of an airgun, a collection of prestack seismic traces are recorded, one-trace from each receiver 36. For each trace and each bin 38 under the coverage of the, the DMO operator transforms the trace and adds it to the poststack trace associated with the bin. Since the stream cable 32 follows in a nearly perfect straight line behind the vessel 30 parallel to the direction the vessel is sailing, the bins closest to the airguns 34 (called "near offset" bins) and under the streamer cable will be in the coverage of more traces than the bins closest to the last receiver 36 on the cable (called "far offset" bins).

The ratio of traces covering a so-called "near offset" bin to those covering a "far offset" bin will be equal to the number of uniquely located receivers 36 on the streamer cable. Typically, there are between 120 and 240 receivers on a cable. This means that a processor node 16 assigned to process a near-offset bin will have perhaps 240 times more work to do than a node assigned to a far-offset bin.

The preceding discussion considered only the processing of a single shot record (the set of traces recorded by all of the receivers from a single shot of an airgun). The load imbalance problem is further exacerbated when multiple shots are processed simultaneously, as is typically done when executing DMO on a multiprocessor computer. To see why this is so, consider that the acquisition vessel sails forward a short distance (typically 25 meters) between shots. As a result, the number of traces covering bins near the near-offset bin of the first shot in a set of shots is multiplied roughly by the size of this set; however, the coverage of the first far-offset bin is unchanged, since the receiver at the end of the streamer cable has now been towed beyond the bin.

A similar load imbalance will exist when processing land seismic data, which is typically sorted into collections of prestack traces associated with each receiver point in the survey. The corresponding shot points are located in all directions and at various distances from the receiver, causing the trace coverage of bins near the receiver to be higher than those farther from the receiver. If sets of traces from multiple receivers are processed simultaneously, and if the receivers in the set are located near one another, the severity load imbalance problem will increase, as it does when multiple marine shot gathers are processed.

### SUMMARY OF THE INVENTION

Broadly speaking, the method of the present invention supplies prestack seismic data to the processing nodes of a multiprocessor computer increasing input efficiency and avoiding contention between nodes. Conceptually the processing nodes are divided into input and operator nodes. The prestack seismic data is input to the input nodes, where the data is examined to determine the coverage-preferably spatial coverage-of the data in each input node. Next, each input node broadcasts to the operator nodes a description of its coverage. Each operator node is then assigned an area within the coverage for processing. In the preferred embodiment, the coverage is a bounded region of the earth partitioned into bins and an area is one or more bins. After area assignment, each operator node requests and receives prestack seismic data for its assigned area from the input nodes in possession of the data.

In a preferred form, the present invention allows the computational workload of a seismic process, such as DMO processing to be partitioned unequally and dynamically over multiple processors in a multiprocessor computer to achieve good load balancing. The invention provides a method for determining how many bins to assign to each processing node of a multiprocessor computer to process a given collection of prestack trace data while achieving good load balancing. The invention also provides a method for efficiently reading different amounts of poststack data from the disk storage system of a multiprocessor computer into different processing nodes of a multiprocessor computer, applying a seismic operator to the data, and then writing the updated poststack data back to the disk storage system.

In seismic data processing steps, a primary task is enhancing signal at the expense of noise and shifting the acoustic reflectors to their true geological position. "Stacking" is a key signal enhancement technique and is the averaging of many seismic traces that reflect from common points in the subsurface. Because each trace is assumed to contain the same signal but different random noise, averaging enhances the signal while reducing the noise. As the spacing between the source-receiver pair increases (offset) the two way reflection travel time also increases because the sound has a longer path to travel. "Normal moveout" correction converts every trace to zero offset which for a marine seismic acquisition, must also account for initial speed and streamer position. "Dip Moveout" (DMO) partially migrates dipping events after normal moveout correction to remove the effect caused by source-receiver separation. The full migration processing step that follows further shifts dipping reflectors to nearer their true physical location.

A preferred embodiment of the invention provides a method for efficiently inputting prestack seismic data for Kirchhoff-style prestack migration and DMO programs on MPPs with varying numbers of disks and processors. The preferred method partitions the MPP into a set of "operator" nodes and a set of "input" nodes. Operator nodes are assigned to nonoverlapping subsets of bins of a seismic survey, and apply a migration operator to multiple prestack traces to incrementally create a poststack trace associated with each assigned bin.

In a preferred embodiment of the invention, poststack data associated with bins in the seismic survey is stored in a file on a scalable disk storage system, such as a RAID subsystem. This sort of system can provide large amounts of data to the operator nodes; the data consists of one or more poststack traces per bin. Typically, a given bin will be read from disk, updated, and written out to disk multiple times during the processing of a prestack data set. To achieve high performance, the poststack data is desirably arranged on the file so that read and write requests describe contiguous blocks of file data. The bins assigned to the first operator node must immediately precede those assigned to the second operator node; the bins assigned to the second operator node must immediately precede those assigned to the third, and so on. This guarantees that all of the poststack bins read or written form a contiguous subset of the file.

In the preferred embodiment of the invention, input nodes read prestack trace data from a scalable disk storage system, such as a RAID subsystem. This sort of system can efficiently supply large amounts of data to the input nodes; the data consists of a large, contiguous, block of prestack traces, and is equally divided into a number of smaller blocks, one smaller block into the memory of each input node. Alternatively, the prestack data can be read into the MPP using a high-speed connection to an external data network, such as a HiPPI network. The only requirement is that each contiguous block of data read into the MPP is distributed across the input nodes' memories.

Each time a block of prestack data is read into the input nodes, the input nodes determine the union of the spatial coverage of each of the prestack traces they contain. When performing 3D DMO, an individual trace's coverage is a line between the source and receiver. When performing "Saddle" DMO an individual trace's coverage is an ellipse, one of whose axes is the line between the source and receiver. See, Meinardus and Schleicher, 3-D time-variant dip moveout by the f-k method, in *Geophysics,* Vol. 58 No. 7, July, 1993. When performing 3D Kirchhoff depth migration, the coverage is potentially the entire survey.

The union of the spatial coverage of the traces in each input node is one or more irregularly-shaped polygons constructed of bins. Once the input nodes have calculated this union, each input node broadcasts to all other nodes a compact description of this coverage. Each node that receives this broadcast unions the description into an initially empty coverage description. After all input nodes have broadcast a description of the coverage of the traces they hold, and all such broadcasts have been received by all nodes, all nodes possess a description of the union of the coverages of all traces in all input nodes. This coverage description is referred to as the "coalesced" description.

All operator nodes retain the coalesced coverage description and the individual coverage descriptions from each input node. The coalesced description provides the operator nodes with a means to determine which poststack bins must be updated by the traces held in the input nodes' memories. As previously stated, operator nodes must move contiguous sets of bins between the poststack data file and their memories. The simplest means of achieving this is to organize the poststack data file as an array whose shape matches that of the seismic survey. If this is done, then given a coalesced description of bins to be updated, the operator nodes simply choose multiple sets of contiguous subsets of bins from the survey. Each contiguous subset of bins therefore corresponds to a contiguous subset of the file.

Operator nodes assign themselves to bins from each contiguous subset of bins according to a uniform decision procedure; for example, if a contiguous subset of bins consists of a rectangle of 128 columns and 8 rows, and there are 32 operator nodes, then each operator node can assign itself to a 4 column by 8 row rectangle. The first operator node assigns itself to the left most 4 by 8 rectangle, the next operator node assigns itself to the second 4 by 8 rectangle, and so on. If there are more operator nodes than there are rectangles of bins, some operator nodes remain unassigned and do no migration processing. If there are fewer nodes than rectangles of bins, then the remaining rectangles of bins will be processed in a later round of operator to bin assignments.

Each time an operator assigns itself to a set of bins, it loads into its memory the poststack traces associated with the bins from the poststack data file. It then retrieves a set of prestack traces from one or more input nodes, applies the DMO operator to them, and updates the poststack traces in its memory. If there are more prestack traces to retrieve, the operator repeats the process. When all prestack traces that cover the operator's bin assignment have been processed, the operator write its updated poststack traces back to the poststack data file.

The individual coverage descriptions broadcast by the input nodes provide the means by which the operator nodes determine from which input nodes to retrieve prestack traces. An operator node queries a coverage description to discover if a particular input node holds prestack traces that cover the operator's bin assignment. If that input node does, then the operator requests traces from it.

The simplest of coverage descriptions contains only enough information for an operator to determine whether there are traces that cover a particular bin; in this case, the operator cannot determine how many traces cover the bin *a priori.* Each input node keeps track of which traces have been sent to which operator nodes, so that each node receives a given trace only once. In the trace request to the input node, the operator supplies a maximum number of traces it is willing to accept. If the input node returns fewer than this number of traces, the operator concludes that it has retrieved all relevant traces from the operator and continues requesting traces from the next input node. When all input nodes have been queried in this manner, the operator is done processing prestack traces its the current bin assignment.

A more detailed coverage description includes the number of traces that cover each bin. This allows an operator node to know *a priori* how many traces it will receive from an input node when processing the set of bins to which it is assigned. The advantage of this technique is that it allows the operator nodes to determine bin processing assignments that approximately equalize the amount of work each one performs, based on the number of traces that cover each bin. Thus, operator nodes that would ordinarily be assigned to low coverage areas of the survey, usually at the edges of the survey, can allocate themselves to more bins, and operator nodes assigned to high coverage areas in the interior of a survey can allocate themselves fewer bins.

To achieve good load balancing each block into which the covered bins of the survey are partitioned is composed of a number of horizontally-adjoining bin areas. Each subblock into which these blocks are in turn partitioned is therefore also a number of horizontally-adjoined bin areas.

Thus, operator nodes assigned to an area of the survey in which the coverage is low-for example, an area covered only by far-offset traces-will be assigned more bin areas than operator nodes assigned to an area in which the coverage is high-for example, an area covered by near-offset traces. The smallest assignment containing any bins is a single bin area. The largest assignment is limited only by the amount of memory available on an operator node.

Once the bin area assignments have been determined, the operator nodes load the poststack trace data corresponding to their assigned bins from the poststack data file into their memories. In the preferred embodiment of the invention, the data file containing the poststack traces resides on the disk storage system of the MPP. In order to load this data efficiently, it must be possible to load a single block containing the poststack trace data needed by all of the operator nodes, partition it into contiguous subblocks of potentially varying sizes, and load each subblock into the appropriate operator node.

This is possible if the data in the file is organized as follows. The survey area is assumed to be a rectangle containing a number of rows and columns of bins. The area is decomposed into a number of smaller areas, each smaller area being the width of the survey but only the height of a previously described bin area. Within each smaller area, the first column precedes the second column, which precedes the third column, and so on for the width of the survey. Within each column, data for the first row precedes data from the second row, which precedes data from the third row, and so on, for the height of a bin area. This arrangement makes it possible to read into any node a contiguous block of data formed from any number of contiguous bin areas. It is thus possible to read a contiguous block of bin areas into any number of operator nodes, partitioning the block into contiguous subblocks of zero or more bin areas.

Once the poststack data has been loaded into the memories of the operator nodes, the operator nodes can retrieve the prestack data from the input nodes that hold it, in accordance with the coverage description broadcast from each input node. An operator node only retrieves prestack traces from an input node that holds traces that cover the operator node's assigned bin areas. While some operator nodes have been assigned more bin areas (and hence, more bins) than others, the total number of traces to be processed by each operator node should be as uniform as possible. As a result, each operator node should finish retrieving and processing its prestack traces at about the same time.

When all operator nodes are thus finished, they write their updated poststack trace information back to the poststack trace data file, using an inverse operation to that previously described for reading the poststack trace data. The operator nodes then assign themselves to the next contiguous block of bin areas within the covered bins of the survey. When all such blocks have been processed, the input nodes read in the next block of prestack data, and the previously-described process repeats. When no unprocessed prestack data remains, the DMO computation terminates.

### BRIEF DESCRIPTION OF THE DRAWINGS

FIG. 1 is a block diagram of the abstract massively parallel processor architecture for performing seismic processing in accordance with the methods of the present invention;
FIG. 2 is a block diagram depicting the abstract architecture of a processor node in an MPP used for performing partial or full migration in accordance with the methods of the present invention;
FIG. 3 is a simplified depiction of marine seismic data acquisition;
FIG. 4 illustrates the bin coverage of the "far-offset" trace in the survey depicted by FIG. 3;
FIG. 5 illustrates the operation of computing the union of two trace coverage descriptions;
FIG. 6 is a bar graph depicting how the trace coverage for bin areas varies over a large number of columns for marine seismic data;
FIG. 7 is a bar graph depicting how a simple, non-load-balancing assignment of bin areas to operators for the coverage data of FIG. 6 would result in greatly varying workloads for different operator nodes;
FIG. 8 is a simplified depiction of land seismic data acquisition;
FIG. 9 is a graph describing an assignment of bins to operator nodes in accordance with the methods of the present invention;
FIG. 10 is a block diagram illustrating the abstract massively parallel processor architecture of FIG. 1 as it is used according to the methods of the present invention;
FIG. 11 depicts the linear format of a prestack data file of a block of traces used as input;
FIG. 12 is a table depicting a compact coverage description, in this case a tabular form of run-length encoding, corresponding to the coverage depicted in FIG. 9;
FIG. 13 is a graph of a potential mapping of bins to locations in a poststack data file in accordance with the preferred embodiment of the invention;
FIG. 14 depicts an in-memory data structure used for determining per-bin-area trace coverage counts in accordance with the methods of the present invention;

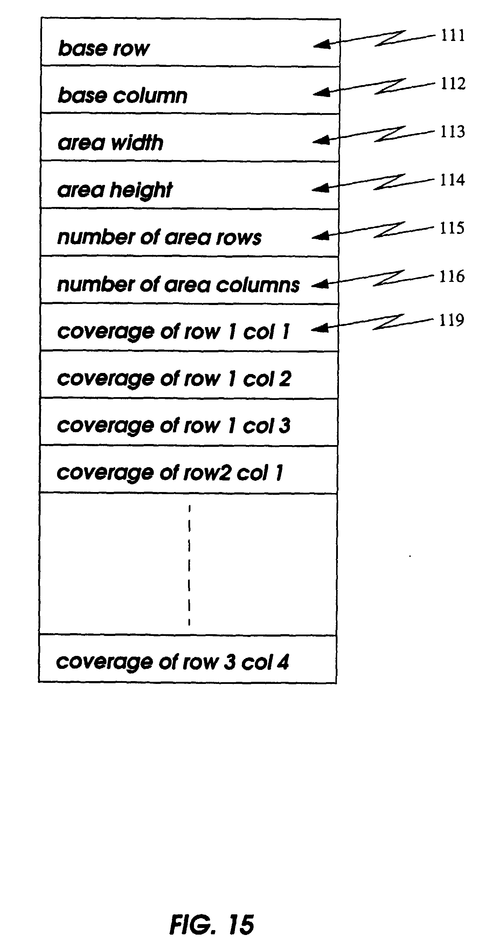

FIG. 15 is a schematic depicting a version of the data structure of FIG. 14 compatible with methods of data transmission over the control and data communications network of the MPP in accordance with the methods of the present invention;
FIG. 16 is a bar graph depicting how the methods of the present invention greatly reduce the variance in workload between different operator nodes for the coverage data of FIG. 6;
FIG. 17 is a bar graph depicting the number of columns assigned to each operator node using the coverage data depicted in FIG. 6;
FIG. 18 depicts a data structure showing the organization of a poststack data file in accordance with the methods of the present invention; and
FIG 19 depicts an example of a survey area for comparison with the data structure of FIG. 18.

### DETAILED DESCRIPTION

In the preferred embodiment of the present invention, methods are provided for supplying prestack input data to processing nodes on a massively parallel processor (MPP) for performing seismic processing, such as a "3D Dip Moveout" or "Kirchhoff" migration.

### MPP Overview

Figure 1 depicts an abstract MPP architecture compatible with the methods of the present invention. The exact details of the data and control communications network are unimportant. In accordance with the methods of the present invention, the communications network 14 need only support the exchange of arbitrary messages between any two processor nodes 16, the ability of any one processor node 16 to broadcast an arbitrary message to all other nodes 16, and the ability of all nodes 16 to synchronize their activities when necessary. Under the preferred embodiment of the invention, the data network 14 should support the transfer of at least 5 megabytes of data per second for each node 16 in the MPP 10. For example, an MPP containing 32 nodes should support at least 160 megabytes/second of aggregate data throughput.

Figure 2 depicts an abstract MPP processing node 16 compatible with the methods of the present invention. Once again, the exact details are unimportant. In the preferred embodiment of the invention, the node 16 should contain at least 16 megabytes of local random access memory 20, and is capable of transmitting and receiving data over the interface 22 to the data communications network 14 at a rate of at least 5 megabytes/second. The CPU 18 can in fact comprise a number of processors.

The preferred embodiment of the invention employs an MPP architecture whose performance scales nearly linearly as the number of processors, amount of memory 20 on each node 16, and size of the disk storage system 12 are increased commensurately. This requires the throughput of the data and control network 14 to scale linearly with the number of processors (number of nodes 16 and number of processors comprising CPU 18 within a node), since more processors will exchange more data using the network 14. It further requires the throughput of the disk storage system 12 to scale with the number of processors, since more processors will attempt to read more data at the same data rate. By implication, this also requires the capacity of the disk storage system 12 to scale with the number of processors.

A disk storage system architecture that meets this requirement is a disk array, sometimes called a "RAID" architecture, in which a number of usually inexpensive disks are made to appear as a single file system. See, S. J. Lo Verso, M. Isman, A. Nanopoulos, W. Nesheim, E. D. Milne, and R. Wheeler. SFS: A parallel file system for the CM-5. In *Proceedings of the 1993 Usenix Conference.* Employing a RAID architecture is in itself insufficient to guarantee scalability. The disk storage system must be used in a scalable manner. In general, this requires disk read and write operations to be both synchronized in time and localized over the disk surface, such that each disk is reading or writing from the same place at the same time.

One such MPP that satisfies these requirements is the Connection Machine model CM-5, manufactured by Thinking Machines Corporation of Cambridge, Massachusetts, employing a DataVault or Scalable Disk Array as a disk storage system 12. The I/O system allows any group of nodes 16 to read a block of data from the disk storage system 12, or write a block of data to the disk storage system 12, subject to the constraint that the data block represents a contiguous subset of a file. The block is read into or written from the memories of the group of nodes. The first part of the block is read into or written from the first node in the group; the second part of the block is read into or written from the second node in the group (if there is one). Each succeeding part of the block is read into or written from each succeeding node in the group through the last node in the group.

It should be understood that other multiprocessor computer architectures and other disk storage system architectures that either require or allow a contiguous block of data to be read into or written from a group of nodes 16 of a multiprocessor computer can also be employed without departing from the scope of the present invention.

### Seismic Acquisition

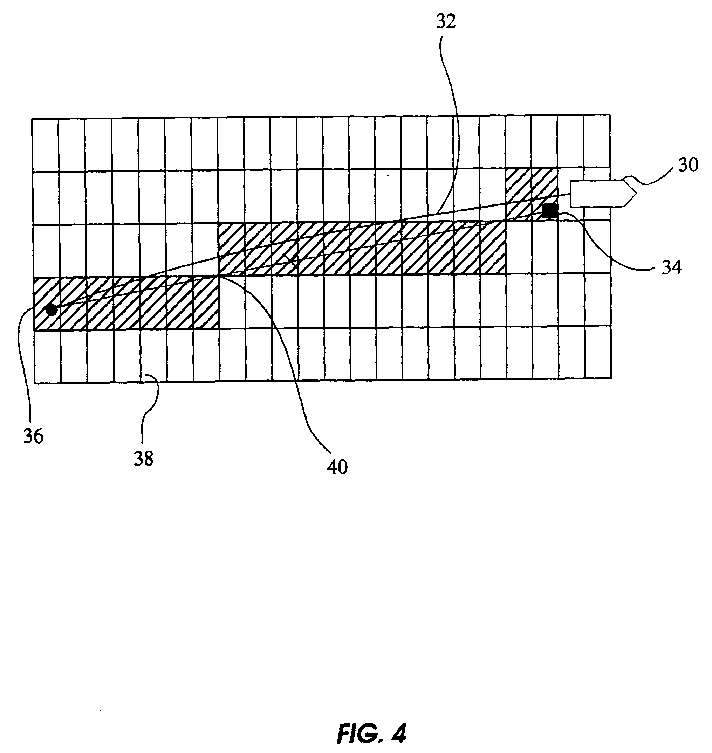

As previously noted, the advantage inherent in using an MPP when performing seismic migration is the potential for significantly reducing the amount of time required to process the prestack data. Figure 3 shows a simplified marine seismic data acquisition scenario. In actual contemporary practice, a seismic acquisition vessel can tow two streamers 32, which can be up to 5 kilometers in length. Typically a source or airgun array 34 operates in conjunction with a streamer 32 having up to 240 receivers 36 (hydrophones). In addition, survey vessels 30 often operate in pairs, one vessel 30 firing seismic sources 34, and both vessels recording the resulting echoes at the receivers 34. The area over which the seismic survey is conducted is partitioned into bins, as shown in Figure 3. Each trace recorded during a survey crosses a number of bins 38. During migration, a prestack trace is processed by application of a mathematical operator once for every bin 38 under the trace's "coverage," and superimposed with other traces processed into the same bin. For example, the coverage of a trace in a 3D Dip Moveout program is a line between the seismic source 34 and trailing receiver 36, as depicted in Figure 4. Thus, in the present application the term "coverage" means an identification of the bins containing seismic data associated with a particular trace. In practice, such a "far offset" trace may cross 400 such bins 38, and an average trace may cross 240 bins. Contemporary seismic surveys can contain 80 million traces, or approximately 800 gigabytes of data; furthermore, the size of surveys is increasing every year. Marine prestack data is usually collected into "common shot gathers" consisting of the traces collected from each receiver on the streamer from a single shot.

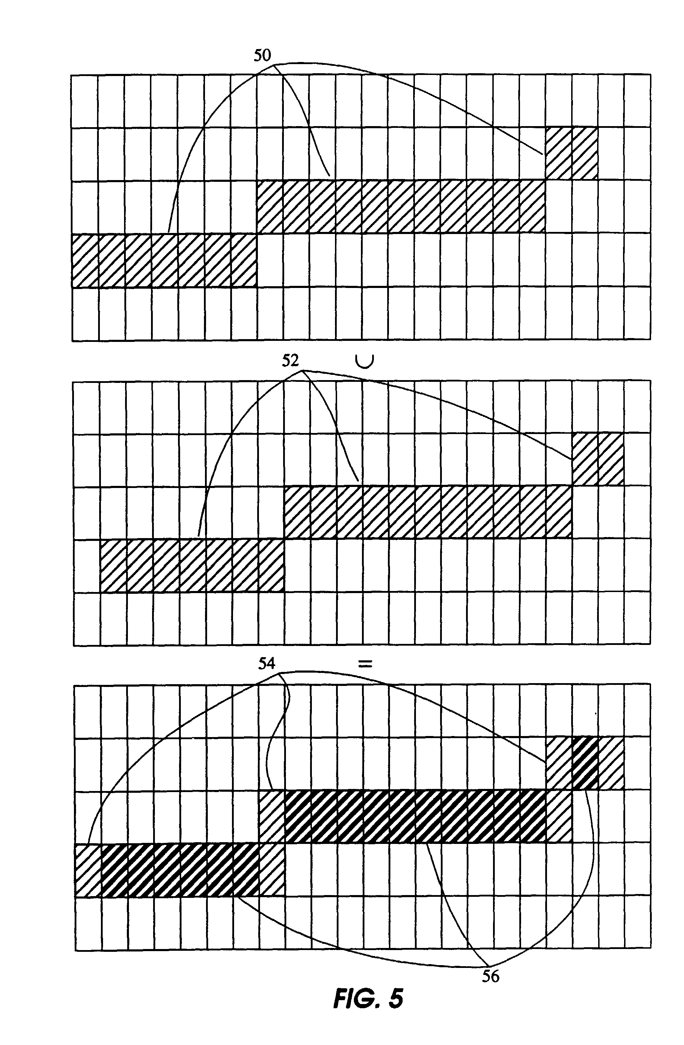

Figure 5 shows how the coverage from the far-offset traces of two common shot gathers from shots taken in succession combine to create workload imbalance. The first shot coverage 50 (Fig. 5 top) combines with the second shot coverage 52 (Fig. 5 middle) to form the combined coverage 54 (Fig. 5 bottom). In the combined coverage 54, the darker cross-hatching 56 depicts those bins that are covered by the far-offset traces of both shots. Because the amount of work to be done when processing a bin depends on the number of traces whose coverage includes the bin, processors assigned to bins with two-trace coverage will have more work to perform than those assigned to bins with single-trace coverage. When more than two shots at a time are considered, and when the streamers contain the typical number of receivers used in actual marine seismic acquisition, and when all of the traces recorded from each streamer are considered, the load imbalance problem can be significant, with some bins covered by more than a few thousand times as many traces as others.

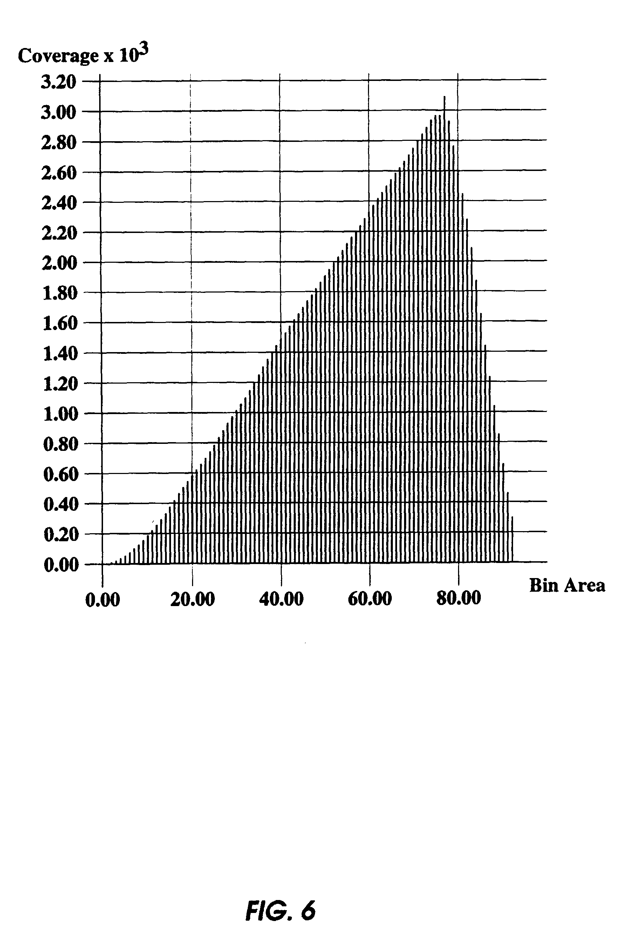

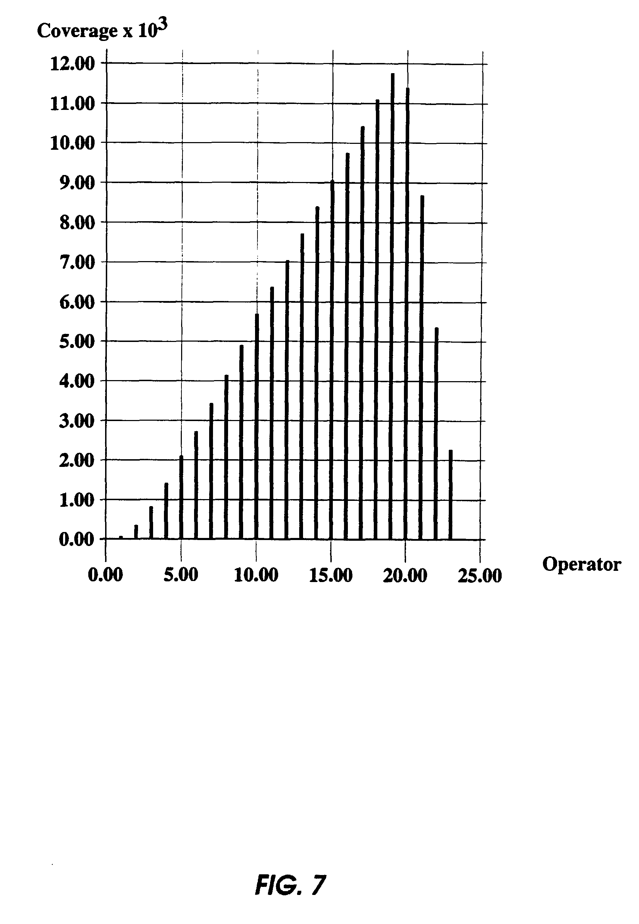

Figure 6 shows the trace coverage of a line of 95 bin areas, each bin area consisting of 4 columns of bins and 8 rows of bins (e.g. 32 bins), using data from an actual marine seismic survey. The streamer contained 144 receivers with a maximum offset (distance from source to receiver) of just over 3 km. The coverage data was generated from 32 common shot gathers. The peak coverage value is 3092 traces in a single bin area, whereas the smallest non-zero value is 2 traces in a single bin area. Figure 7 shows how many traces each processor of a 24-processor MPP would process if the bin areas of Figure 6 were assigned respectively to the processors, such that each processor was assigned 4 bin areas (*i.e.,* rectangular areas consisting of 16 columns and 8 rows or 128 bins), except for the last processor, which would be assigned 3 bin areas. The busiest processor would process almost 12,000 traces, whereas the least busy processor would process only 5 traces.

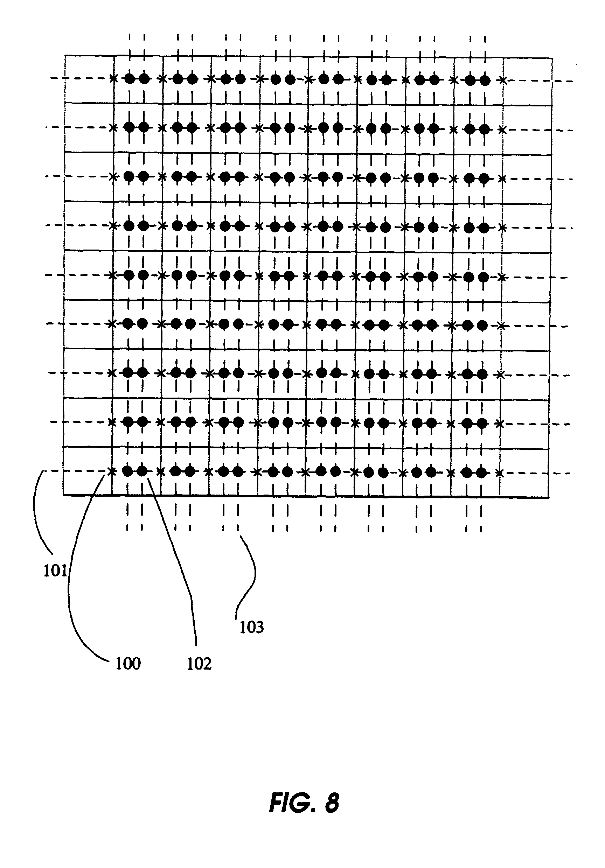

The foregoing discussion considered only marine seismic data acquisition. However, load balancing problems are introduced in land seismic data acquisition as well. In land seismic acquisition, multiple parallel lines of receivers receive reflections from shots, which are located along multiple perpendicular parallel lines 101, 103 as shown in Figure 8. The lines form a grid. Figure 8 depicts an ideal 3D land survey geometry. The shot points 100 are located along horizontal lines 101 and are indicated with X's. The receiver points 102 are located along vertical lines 103 and are indicated with filled circles.

Land prestack data is usually collected into "common receiver gathers" consisting of the traces collected from a single receiver from all of the shots. Since in general a common receiver gather consists of data from shot points located in all directions around, and at various distances from the receiver location, the trace coverage of such a gather tends to be greater in bins nearer the receiver location than those farther from it. Thus, when multiple gathers are combined, there will be bins with substantially higher trace coverage than others if the locations of the receivers in the collection of gathers are close together.

The methods of load balancing of the present invention are capable of handling both marine and land acquisition geometries.

### Allocation of Bins

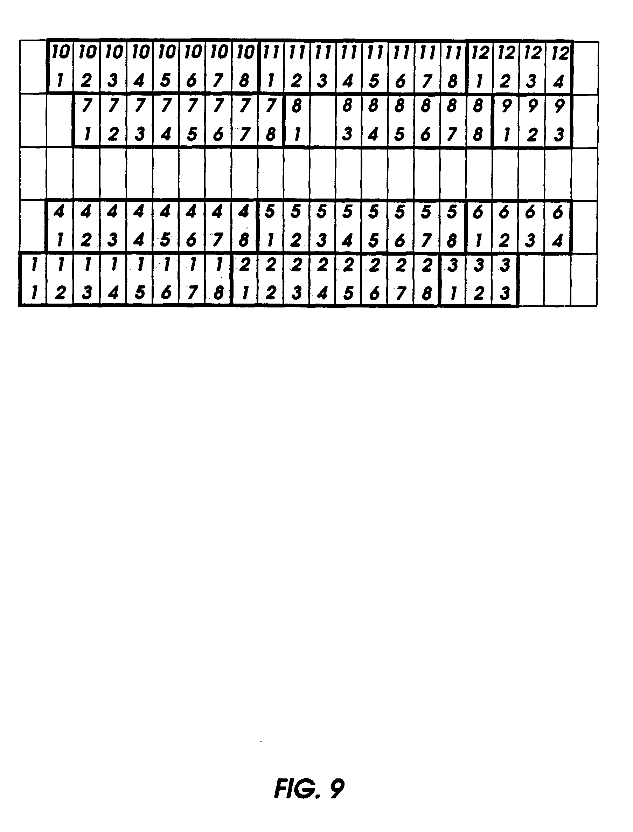

For an MPP to significantly reduce the time required to migrate a prestack seismic data set, a means must be found to decompose the migration task into a number of independent tasks, one per processing node 16. The preferred embodiment decomposes the seismic survey area into a number of smaller areas, each of which is assigned to a node in the MPP. Figure 9 depicts an assignment of nodes 16 to bins 38. Although for simplicity, Figure 9 shows one bin 38 assigned to each node16 at any given time, in the preferred embodiment, significantly more bins 38 are assigned to a node 16 at any one time. In practice, rectangular areas or groups of from 32 to 1600 bins can be assigned to a node 16, depending on the amount of memory 20 present in the node and the total size of the seismic survey. Alternatively, one can interpret each bin depicted in Figure 9 as representing such a rectangular area or group of bins.

In Figure 9, each separate assignment of nodes 16 to bins 38 is a contiguous subset of the seismic survey area. This is not strictly required by the methods of the present invention, however, under the preferred embodiment of the invention, this contiguity of bins can allow for efficient transfer of poststack data between the memories of the nodes and a data file resident on the disk storage system, for the same reasons discussed previously with regard to prestack data.

The contiguity also allows for a simple algorithm to determine bin-node assignment. In Figure 9, each bin assignment consists of two numbers. The bottom number is the index of the node assigned to the bin-or in general, to an area or group of bins-in the set of processing nodes dedicated to seismic processing. Since these nodes execute the migration "operator," they are referred to as "operator" nodes. Given a set of *O* operator nodes, the nodes are indexed from 1 to *O.* The upper number indicates which of the potentially many assignments of operator nodes to bins is currently active. When there are more bins 38, or more areas or groups of bins, than there are operator nodes, each operator node will have to process data for one or more bins or areas or groups of bins. Figure 9 depicts 12 such assignments of 8 nodes. Note that if a row contains a gap that is smaller than the number of nodes, it is possible to assign bins to the left and to the right of the gap at the same time.

Although under the methods of the present invention, each operator node is assigned to an independent set of bins covering the survey, the bins may not be independent of which prestack data traces are required to correctly form the poststack traces associated with the bins 38. Consider a seismic acquisition survey such as depicted in Figure 3 and a bin assignment such as depicted in Figure 9. It is clear that any single prestack trace (e.g., line 40 in Figure 4) may be needed by multiple processors.

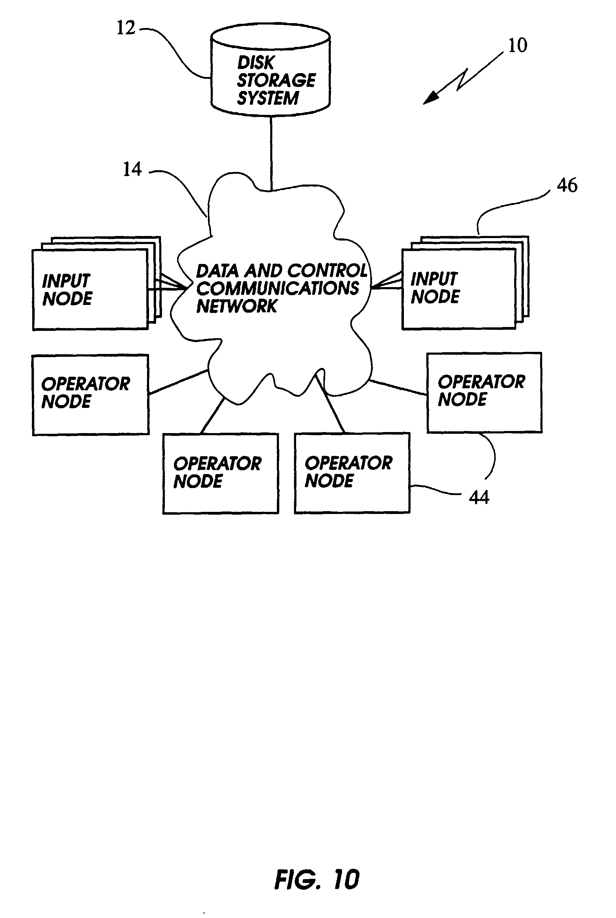

The present invention provides such prestack trace data to operator nodes. The method of the present invention partitions the MPP 10 into a set of "operator" nodes 44 and a set of "input" nodes 46, as depicted in Figure 10. Operator nodes 44 are assigned to nonoverlapping subsets of bins 38 of a seismic survey, as described previously. Operator nodes 44 apply a migration operator to multiple prestack traces to incrementally create a poststack trace associated with each assigned bin.

### Processing of Data

In the preferred embodiment of the invention, input nodes 46 read data from a scalable disk storage system 12, such as a RAID subsystem. This sort of system can efficiently supply large amounts of data to the input nodes; the data consists of a large, contiguous, block of prestack traces, and is equally divided into a number of smaller blocks, one smaller block into the memory 20 of each input node 46. Alternatively, the prestack data can be read directly into the MPP 10 using a connection to an external data network, such as a HiPPI network. A major feature of the methods of the present invention is that each contiguous block of data read into the MPP 10 is distributed across the input nodes' memories. The input nodes 46 read trace data in sequential, contiguous, blocks. Each block contains an integral number of traces, and each input node 46 reads an integral number of blocks into its memory 20 at one time. This type of read is efficient, as it causes no contention for control of the disk storage system 12 among the input nodes 46.

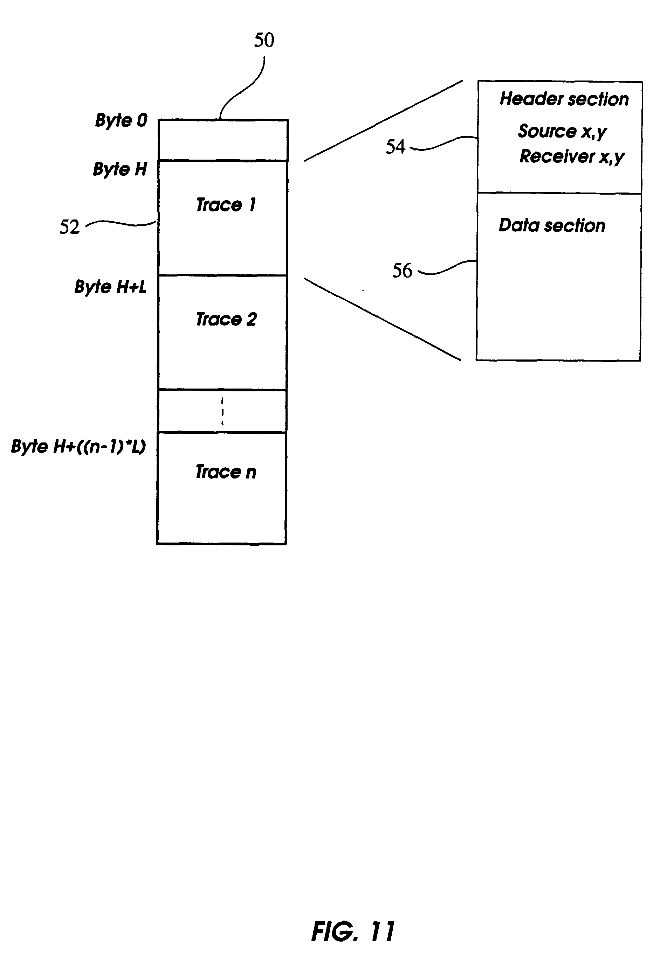

Figure 11 depicts such a block 50 of n prestack traces 52. Each trace consists of a header section 54 and a data sectiou 56. The data section contains the data to be processed or migrated. The header section 54 contains information that, among other pieces of information, identifies the location of the seismic source and receiver for the associated data.

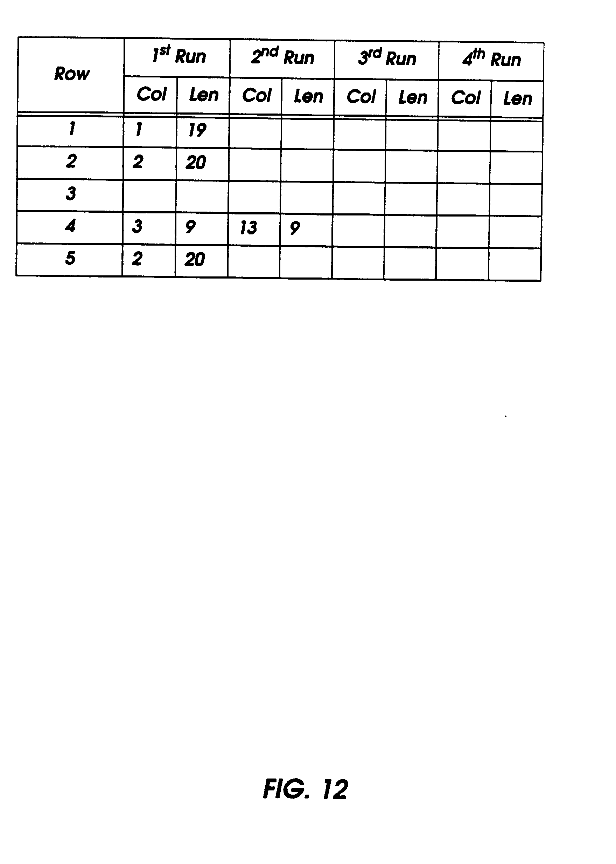

Each time a block 50 of prestack data is read into the input nodes 46, the following steps are taken:
1. The input nodes 46 determine the union of the spatial coverage of each of the prestack traces 52 they contain. The union of the spatial coverage of the traces in each input node 46 is one or more irregularly-shaped polygons constructed of bin 38. For example, Figure 9 depicts the union operation for two prestack trace coverage descriptions. It is clear that any number of such trace coverage descriptions can be unioned together, and that doing so will create an irregular polygon of bins.
2. Once the input nodes 46 have calculated this union, each input node 46 broadcasts to all other nodes (44, 46) a compact description of this union of coverage. Input node 0 broadcasts first, input node 1 second, and so on, until input node *I*-1 has sent its broadcast. The data and control communications network 14 ensures that these broadcasts are received in order.
   The description that is broadcast can be in any form, so long as from it, the receiving node (44, 46) can determine which bins are covered. A possible form is a 2D array of boolean values, having the same shape as the ultimate survey (as exemplified by Figure 9), where true elements in the array signify covered bins 38 or groups of bins, and false elements signify noncovered bins. Because this array is likely to contain only sparse coverage, the preferred embodiment of this description is a "sparse matrix." Figure 12 depicts one possible sparse matrix representation, as a table of run-length encodings of covered bins in each row. It should be understood that other representations are possible and are within the scope of the present invention.
   Each node (44, 46) that receives this broadcast unions the description into an initially empty coverage description, which ultimately will hold the coalesced coverage description. After all input nodes 46 have broadcast a description of the coverage of the traces 52 they hold, and all such broadcasts have been received by all nodes (44, 46), all nodes possess a coalesced description of the union of the coverages of all traces in all input nodes 46. The coalesced description corresponds to the shaded area in Figure 9. Operator nodes 44 also store each input node's broadcast in a table indexed by the input node's number.
3. After all input nodes 46 have broadcast a description of the coverage of the union of traces they have loaded, and all nodes have received these broadcasts, then all nodes possess the coalesced description of the coverage of all traces loaded into the memories 20 of all input nodes (44, 46). From this information, it is possible for all operator nodes 44 to independently choose their bin assignments. One such assignment of bins 38 to operator nodes 44 is determined as follows:
   a. All operator nodes 44 assign themselves to a rectangular array of bins. The number of rows *y* in the array is the same across all operator nodes. The number of columns in the array may vary, but only if each operator node 44 knows *a priori* how many columns every other operator node 44 will assign itself, or has the means to determine this information on its own. One simple strategy is to assume that all operator nodes 44 assign themselves to the same number of columns *x.*
   b. The first operator node (operator node 0) assigns itself to a rectangular array of bins 38 whose lower left corner coincides with the left most, lowest covered bin in the overall trace coverage. Assume the lower left corner of the assignment is bin (*x*₀, *y*₀). If all operator nodes 44 assign themselves *x* columns, then the upper left corner of operator node 0's assignment covers bin (*x*₀+*x*-1, y₀+*y*-1).
   c. Each remaining operator node 44 assigns itself to rectangular array of bins that is located immediately to the right of the array assigned to the operator node with the index one less than its own. For example, if all operator nodes 44 assign themselves to x columns, then operator node l's assignment covers a rectangular array of bins whose lower-left corner is (*x*₀+*x*, y₀) and whose upper left corner is (*x*₀+2*x*-1, y₀+*y*-1). In general, an operator node 44 whose index is *i* will be assigned corners (*x*₀+*ix*, y₀) and (*x*₀+(*i*+1)*x*-1, y₀+*y*-1).
   d. Some operator nodes 44 may be assigned to rectangular arrays of bins that are not completely covered by traces. These operator nodes 44 have less work to do than other operator nodes. Some operator nodes may be assigned to rectangular arrays of bins that are not at all covered by traces. These operator nodes have no work to do. (Work here is defined as applying the DMO operator to create poststack traces from prestack traces.)

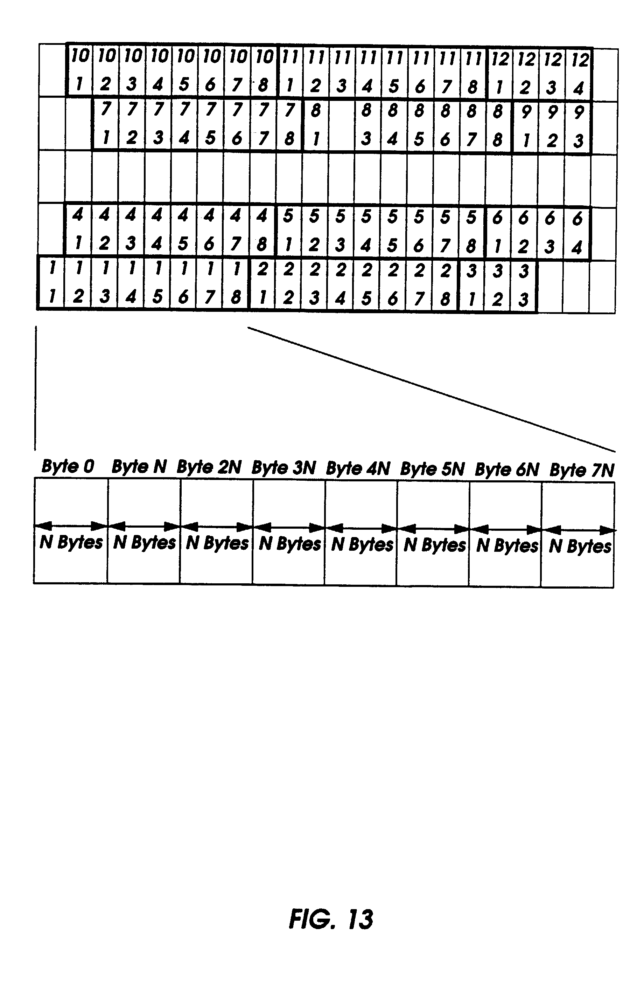

   It should be understood that other assignments of bins 38 to nodes are possible. Under a preferred embodiment of the invention, the bins assigned to any one operator node 44 are stored in a contiguous subset of the poststack data file, and the union of all such subsets is itself a contiguous subset of the poststack data file, as illustrated in Figure 13.
4. After an operator node 44 assigns itself to a set of bins, as described in Step 3, it loads into its memory 20 the poststack traces associated with the bins from the poststack data file.
5. After all operator nodes 44 have determined to which bins they are assigned, and all have loaded the poststack traces associated with those bins, the operator nodes 44 can start to request prestack trace data from the input nodes 46. The previously-stored per-input-node coverage information (from Step 2, above) helps the operator nodes 44 choose input nodes 46 to which to send trace requests: An operator node 44 sends trace requests only to those input nodes 46 that hold traces whose coverage intersects the operator's bin assignment.
6. Each operator node's request to an input node 46 for prestack traces 52 includes a description of its assigned bins and the maximum number of the traces the operator node 44 is willing to receive. The operator node has no *a priori* knowledge of the number of traces the input node 46 holds that intersect the operator node's bin assignment. If the operator node 44 receives the number of traces it indicated it was willing to receive, it asks the same input node 46 for more traces. The input node 46 keeps track of the traces it has sent to the operator node, so that it never sends the same trace more than once for the same bin assignment description.
   If an operator node 44 ever receives fewer than the maximum number of traces it indicated it was willing to receive, it must conclude that the input node to which it sent the trace request has supplied all of the traces whose coverages intersect with the bin assignment. At this point, the operator node can send a trace request to the next input node 46 that holds traces whose coverages intersect its bin assignment.
7. Operator nodes 44 can process the received trace data as appropriate. In some cases, they may process a small number at a time (*e.g,* each time they receive traces from a input node); in other cases, they may wait until all traces have been received from all input nodes, and then process the traces. Clearly, any policy between these two extremes is possible under the methods of the present invention.
8. After all prestack data has been processed by the operator nodes, the above process may repeat. If the union of the bin assignments of the operator nodes forms a subset of the bins covered overall by the trace data in all input nodes, then steps 3-7 can be repeated as needed. Each time, the lower-left corner of the bin assignment for the first operator node is the first unprocessed bin that follows that last bin processed by the last operator node in the previous assignment. If there are covered bins starting at the same row *y*₀ (or between *y*₀ and *y*₀+*y*-1), then *x*₀ is simply incremented by *Ox.* If no covered bins remain to the right of the previous bin assignment, then (*x*₀, *y*₀) is chosen as in step 3b, but the search for a row containing covered bins begins *y* rows above the row at which the previous *y*₀ was found.
9. Steps 3-8 are repeated until no covered bins that have not been assigned and had prestack data processed into them remain.
10. Steps 1-9 are repeated for the next block of input data from the file on the disk storage system, until all data in the file has been processed. These steps can be repeated for additional files, as well.

### Determining Trace Coverage for Load Balancing

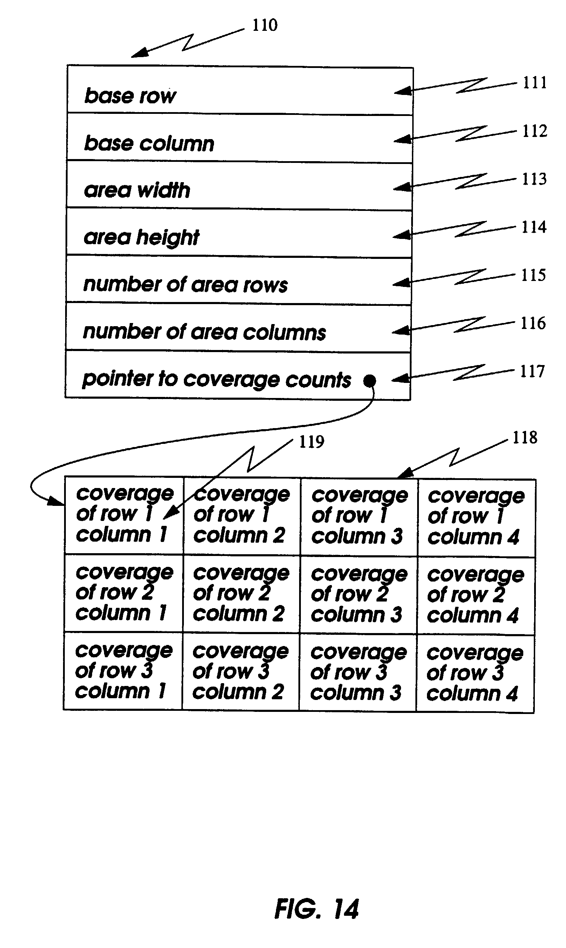

In accordance with the load balancing methods of the present invention, MPP nodes are designated as input or operator nodes, and the input nodes load a collection of prestack traces. Once this prestack trace data has been read, the input nodes determine the number of traces covering each rectangular bin area. Figure 14 depicts a coverage map 110 of a data structure compatible with the methods of the present invention in which the input nodes can store coverage information. The preferred means for filling this data structure is as follows:
1. For each trace *i* each input node has loaded, tbe node determines the smallest rectangular bounding box, *B*_{*i*}*,* in a Cartesian coordinate system that encloses the coverage of the trace. If the migration application is a DMO computation, the coverage is a line drawn between the shot and receiver locations for that trace (see Figure 4). The shot and receiver location is found in a header section that precedes the data portion of the trace.
2. Each input node unions together each such bounding box *B*_{*i*} to create the smallest bounding box, *B*_{*L*}*,* that encloses the individual trace bounding boxes.
3. Each input node broadcasts to all other nodes (input and operator nodes) in the MPP a compact description of its bounding box *B*_{*L*} created in step 2. In the preferred embodiment of the present invention, this broadcast consists of the leftmost and rightmost *x* coordinates of the box, and the topmost and bottomost *y* coordinates of the box.
   Each node that receives such a broadcast unions the described bounding box *B*_{*L*} with a global bounding box description, *B*_{*G*}*,* such that after all broadcasts have been received, *B*_{*G*} describes the smallest bounding box that encloses each node's *B*_{*L*}.
4. All nodes now have enough information to create a coverage map 110, such as depicted in Figure 14, to hold trace coverage information for all of the data each input node has loaded. This coverage map is referred to as the "coalesced map."
   The base row field 111 of the data structure contains the lower left *y* coordinate of *B*_{*G*} divided by the height of a bin in the survey, and then rounded down to the next smallest multiple of the bin area height (the number of rows of bins that are grouped together to form a bin area).
   The base column field 112 of the data structure contains the lower left *x* coordinate of *B*_{*G*} divided by the width of a bin in the survey, and then rounded down to the next smallest multiple of the bin area width (the number of columns of bins that are grouped together to form a bin area).
   The area width field 113 contains the number of columns of bins that are grouped together to form a bin area. This information may also be encoded in the DMO computation as a constant number, in which case it need not be included in the trace coverage data structure.
   The area height field 114 contains the bin area height. This information may also be encoded in the DMO computation as a constant number, in which case it need not be included in the trace coverage data structure.
   The number of area rows field 115 contains the bin area width. This information is computed from the height of the bounding box *B*_{*G*}*,* rounded up to the next higher multiple of the bin area height.
   The number of area columns field 116 contains the number of columns of bin areas that are described by the data structure. This information is computed from the width of the bounding box *B*_{*G*}*,* rounded up to the next higher multiple of the bin area width.
   The pointer to coverage counts field 117 contains a pointer to a 2-dimensional array 118 (Fig. 14) in which the trace coverage counts for individual bin areas will be stored. This array can be allocated once the number of area rows and number of area columns is known, since these two pieces of information determine the height and width of the array. When the array is allocated, it is initialized to contain 0 in each element. The bin area enclosing the base row 111 and base column 112 of the coverage map 110 is the array element 119.
   It should be understood that other data structures that allow essentially the same information to be stored are within the scope of the methods of the present invention.
5. Input nodes create a coverage map 110 into which they place trace coverage information for each bin area covered by the union of the traces they have loaded.
   For each loaded trace, the input node determines which bin areas are crossed by the trace. For each such bin area, the node increments by one the corresponding element in the trace coverage counts array 118 of the coverage map 110.

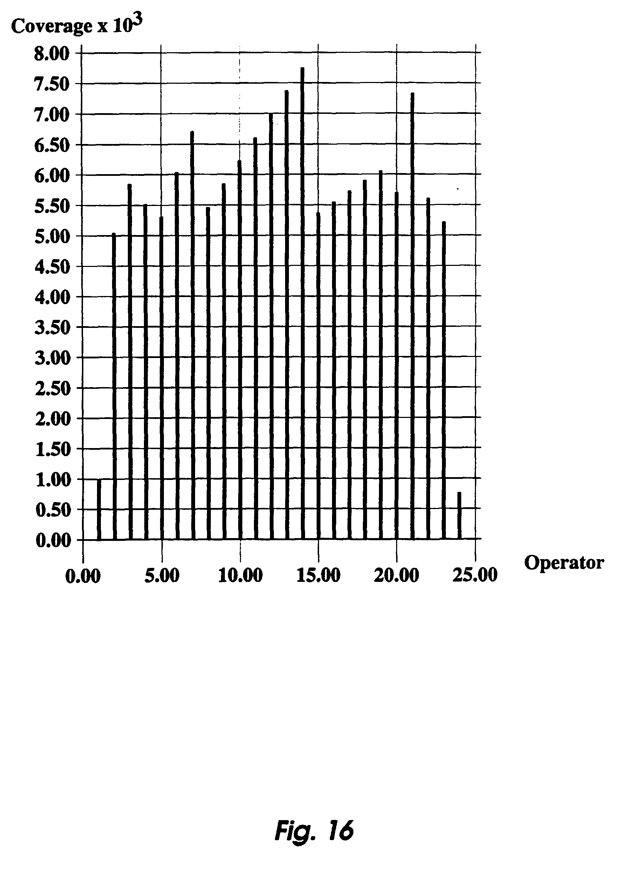

At this point, each input node possesses a coverage map that describes how each trace it has loaded covers the seismic survey. Each node then sends the information in its coverage map to all other nodes in the MPP. Under the preferred embodiment of the invention, this information is sent as follows:
1. Each input node sends two broadcasts. The first broadcast contains the length of the second broadcast. This length is sufficient to include both the fixed size portion of the coverage map and the variable size portion of the coverage map (*i.e.*, the coverage count array). The second broadcast contains the coverage map, rendered in a form that can be sent through the control and data network 14 of the MPP 10 and restored into a machine readable form within each processor node 16. Figure 16 depicts a broadcast format compatible with the methods of the present invention.
2. When a node receives the first broadcast, it allocates a buffer capable of holding the second broadcast. After the node receives the second broadcast into the buffer, it processes the data in the buffer to recreate a copy of the coverage map data structure 110 sent by the broadcasting node.
3. Each node then adds the information in the received coverage map to its coalesced coverage map. This is done by adding element-by-element the coverage count information in the received coverage map to the coverage count information in the coalesced coverage map.

### Bin Allocation for Load Balancing

After each input node has sent its coverage map information, all nodes possess identical coalesced coverage maps that describe trace coverage information for each covered bin area in the survey. From this information, all nodes determine in parallel how to best allocate bin areas to operator nodes subject to optimal load balancing. Each allocation computation is the same and the computation of one node is independent of the computation on other nodes. However, since the data the nodes begin with is identical, and since the allocation computation is identical, each node determines the same allocation of bin areas to operator nodes. Thus, when all nodes have finished the allocation computation, each possesses the same information about bin area allocation.

Many allocation algorithms are possible in accordances with the methods of present invention. The preferred method is as follows:
1. For the first swath of rows that contains covered bin areas, the average bin area coverage value is computed. This is done by summing the coverage counts for each bin area column and dividing by the number of bin areas containing coverage values greater than zero.
2. An initial target coverage value to be assigned to each operator is determined. This target value is simply the average coverage value just computed multiplied by half the maximum number of bin areas each operator node is able to process at any one time.
3. The first operator node is assigned enough bin areas to just exceed the target value. The first bin area assigned is the leftmost bin area in the swath containing covered bins that has yet to be processed. No more bin areas are assigned to the operator node than a previously-specified maximum number of bin areas, and no bin area beyond the rightmost bin area in the swath containing covered bins is assigned.
4. Remaining operator nodes are assigned bin areas as in step 3, except the first bin area assigned is the one to the right of the last bin area assigned to the previous operator node.

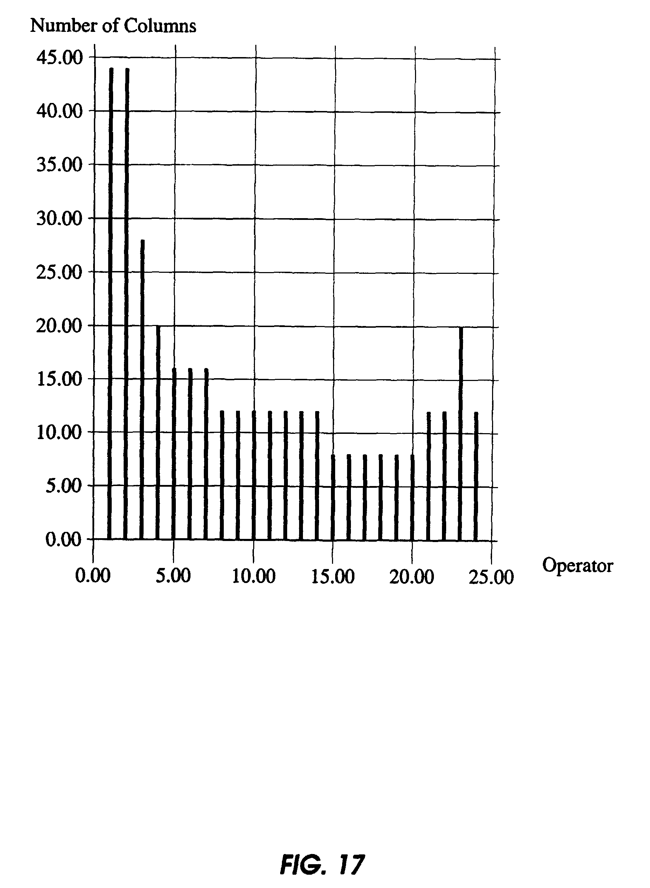

Figure 16 shows how the resulting allocation of bin areas to operator nodes evens out the number of traces to be processed by each operator node, for the coverage data shown in Figure 6. As compared to Figure 7, the variance in the number of traces assigned to each node is significantly smaller, as is the maximum number of traces assigned to any single node. Figure 17 shows how the allocation algorithm assigns a different number of columns to different nodes to achieve this improved load balancing. In this case, the bin area width was 4 columns; thus, each node is assigned a multiple of four columns. The nodes assigned the most columns were assigned 44 columns (11 bin areas), whereas the nodes assigned the least columns were assigned 8 (2 bin areas).

### Poststack Data Transfer

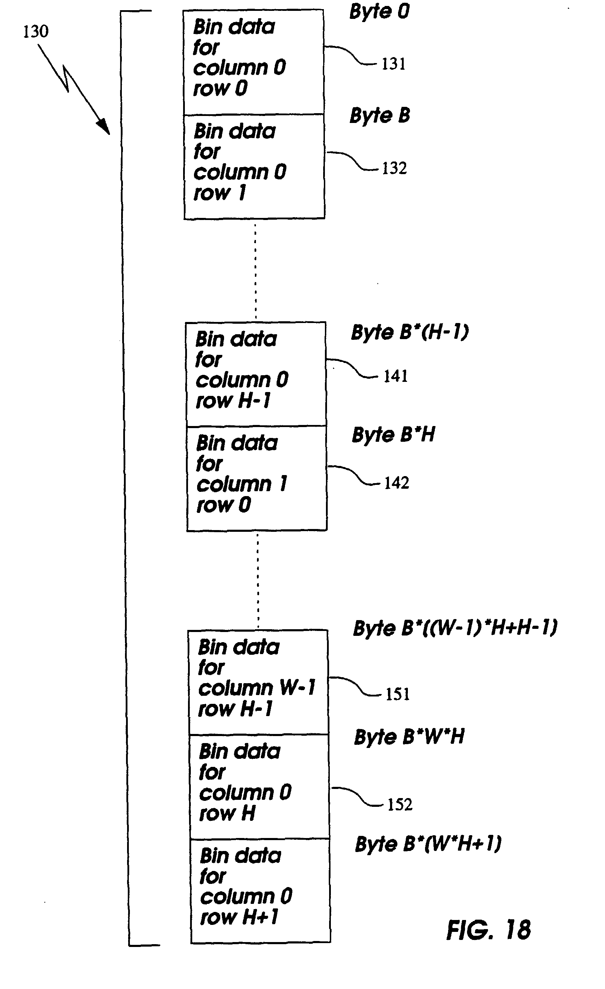

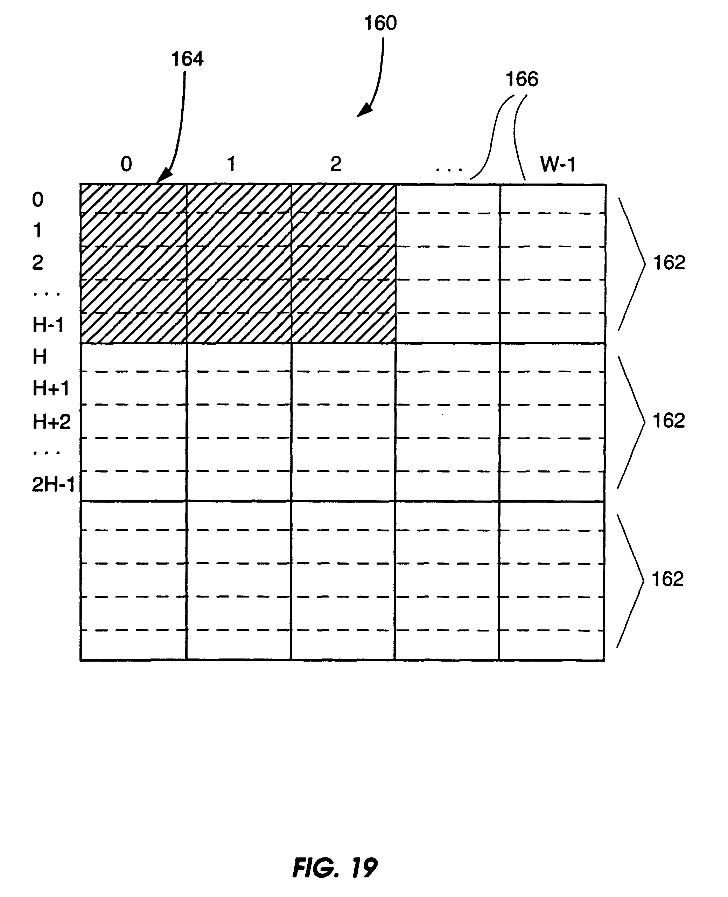

Once the bin area assignments have been determined, the operator nodes load the poststack trace data corresponding to their assigned bins from the poststack data file into their memories. In the preferred embodiment of the invention, the data file containing the poststack traces resides on the disk storage system or remote memory 12 of the MPP 10. As has been noted, it must be possible to load this data in a single operation. Figure 18 depicts a poststack data file organization consistent with the methods of this invention that allows a different number of columns of poststack data to be loaded into different operator nodes in a single input operation from the disk storage system 12. Figure 19 illustrates an example of a survey area 160 for better understanding the data file organization of Figure 18.

The survey area 160 covered by the poststack data file 130 is assumed to be a rectangle containing a number of rows and columns of bins 166. The survey area 160 is decomposed into a number of swaths 162, each swath area being the width *W* of the survey area 160 but only the height *H of* a bin area A bin area is one or more contiguous bins, preferably a rectangle, such as denoted by 164 in Figure 19. Within each swath 162, the first column precedes the second column, which precedes the third column, and so on for the width of the swath. Within each column, data for the first row precedes data from the second row, which precedes data from the third row, and so on, for the height of a bin area

Thus, in Figure 18, the poststack data file 130 is composed of a sequence of blocks, each *B* bytes long. Each block contains the poststack data for a single bin. This data may comprise 1 or more traces. The first block 131 contains poststack data for the bin at column 0 row 0, the bin in the upper left corner of the area covered by the stack file. The second block 132 contains data for the bin at column 0 row 1. Succeeding blocks in the poststack data file 130 contain data for rows 2 through *H*-1 in column 0, where *H* is the height of a bin area. The block 141 contains data for column 0 row *H*-1*.* The block 142 immediately following block 141 contains data for column 1 row 0. Block 151 contains data for column *W*-1 row *H*-1. Block 152, which immediately follows block 151 contains data for column 0 row *H.*

The poststack data file arrangement depicted in Figure 18 thus allows a group of data blocks comprising any number of columns, starting at any initial column, to be transferred between the local memories 20 of the processor nodes 18 and the poststack data file 130 on the disk storage system 12 in a single large data block in a single input or output operation. The number of rows in a data group transferred into or out of each node 18 must be equal to the height of a bin area, and the first row in a data group to be transferred must be a multiple of the bin area height. The number of columns in a data group to be transferred into or out of each node 18 can be different. While the preferred embodiment contemplates having a fixed number of rows in each data group, an alternative could fix the number of columns and vary the number of rows. Each node transfers *c***B***H* bytes from the large data block to transfer *c* columns, where c is the number of bin areas allocated to the node 18 multiplied by the number of columns in a bin area.

Once the poststack data has been loaded into the memories of the operator nodes, the operator nodes can retrieve the prestack data from the input nodes that hold it, and apply the DMO operator to the prestack data to update the poststack data. When all operator nodes are finished processing prestack data that covers their bin assignments, they write their updated poststack trace information back to the poststack trace data file, using an inverse operation to that previously described for reading the poststack trace data.

## Claims

1. A method of assigning prestack seismic input data of a seismic survey to processing nodes of a multiprocessor computer having remote and local memory comprising the steps of:
a) dividing the processing nodes into a plurality of input and operator nodes;
b) reading prestack seismic input data from remote memory into the local memory of input nodes;
c) determining the coverage of prestack seismic input data associated with each bin in the seismic survey;
d) broadcasting the coverage to at least the operator processing nodes; and
e) assigning areas within the coverage to operator processing nodes.

2. The method of claim 1, including the steps of:
each operator node requesting and receiving prestack seismic data for an assigned area from an input node in possession of the seismic data;
processing the received seismic data.

3. The method of claim 1, said coverage comprising a bounded region of the earth partitioned into an array of bins.

4. The method of claim 3, said areas comprising one or more bins within said coverage.

5. The method of claim 3, said assigning step e) comprising sequentially assigning an operator node an area spatially contiguous to a preceding assigned area.

6. The method of claim 1, step e) including assigning areas with said coverage generally equal to load balance processing.

7. The method of claim 1, where for a number of operator nodes including the steps of:
f) each operator node reading poststack seismic data for its assigned areas from remote memory to its local memory;
g) each operator node reading into its local memory its assigned coverage of prestack data from input node local memory;
h) each operator node applying a dip moveout migration operation to its prestack coverage and updating its poststack data; and
i) each operator node writing its updated poststack data from local memory to remote memory.

8. The method of claim 1, in said determining step c) the prestack seismic input data comprising trace data, for each input node the steps of -
determining the smallest individual rectangular bounding box enclosing the bins for each trace coverage the input node has loaded, and
unioning all bounding boxes to create the smallest unioned bounding box enclosing all individual bounding boxes.

9. The method of claim 1, said assigning step e) comprising the substeps of:
dividing the seismic survey into areas of contiguous blocks of bins,
partitioning each block into a plurality of subblocks with the number of subblocks equal to the number of operator nodes and the trace coverage in each subblock approximately equal.

10. A system for processing prestack seismic data comprising:
a multiprocessor computer having a plurality of processing means, each processing means having random access memory and at least one microprocessor;
a scalable disk storage system containing the prestack seismic data; and
a data and control communications network interconnecting the processing means and the disk storage system to the computer;
said processing means having input and operator nodes, said input nodes operable for - reading prestack seismic data into random access memory, determining the coverage of the seismic data in a respective input node, and communicating said coverage through the communications network to said operator nodes,
each operator node being assignable to an area of coverage and operable for - requesting and receiving seismic data from input nodes having data responsive to said area of coverage, and for processing the received data.

## Patentansprüche

1. Verfahren zum Zuweisen von seismischen Vorstapel-Eingangsdaten einer seismischen Aufnahme an Verarbeitungsknoten eines Multiprozessor-Computers mit fernem und lokalem Speicher, mit den folgenden Schritten:
a) Unterteilen der Verarbeitungsknoten in mehrere Eingangs- und Operatorknoten;
b) Lesen von seismischen Vorstapel-Eingangsdaten aus dem femen Speicher in den lokalen Speicher von Eingangsknoten;
c) Bestimmen der Überdeckung der seismischen Vorstapel-Eingangsdaten, die jedem Elementarvolumen im seismischen Plan zugeordnet sind;
d) Senden der Überdeckung wenigstens an die Operator-Verarbeitungsknoten; und
e) Zuweisen von Bereichen innerhalb der Überdeckung an Operator-Verarbeitungsknoten.

2. Verfahren nach Anspruch 1, mit den folgenden Schritten:
Anfordern und Empfangen von seismischen Vorstapel-Daten für einen zugewiesenen Bereich von einem Eingangsknoten, der im Besitz der seismischen Daten ist, durch jeden Operatorknoten;
Verarbeiten der empfangenen seismischen Daten.

3. Verfahren nach Anspruch 1, bei dem die Überdeckung einen begrenzten Bereich der in eine Matrix aus Elementarvolumina unterteilten Erde enthält.

4. Verfahren nach Anspruch 3, bei dem die Bereiche ein oder mehrere Elementarvolumina innerhalb der Überdeckung enthalten.

5. Verfahren nach Anspruch 3, bei dem der Zuweisungsschritt e) das sequentielle Zuweisen eines Bereichs, der an einen vorher zugewiesenen räumlich direkt angrenzt, an einen Operatorknoten enthält.

6. Verfahren nach Anspruch 1, bei dem der Schritt e) das Zuweisen von Bereichen an die Überdeckung enthält, das im allgemeinen gleich einer Lastenausgleichsverarbeitung ist.

7. Verfahren nach Anspruch 1, bei dem eine Anzahl von Operatorknoten die folgenden Schritte enthält:
f) Einlesen, durch jeden Operatorknoten, von seismischen Nachstapel-Daten für seine zugewiesenen Bereiche vom entfernten Speicher in seinen lokalen Speicher;
g) Einlesen, durch jeden Operatorknoten, seiner zugewiesenen Überdeckung der Vorstapel-Daten aus dem lokalen Speicher des Eingangsknotens in seinen lokalen Speicher;
h) Anwenden, durch jeden Operatorknoten, einer Einsenkungs-Hinausschiebungs-Migrationsoperation auf seine Vorstapelüberdekkung und Aktualisieren seiner Nachstapel-Daten; und
i) Schreiben, durch jeden Operatorknoten, seiner aktualisierten Nachstapel-Daten aus dem lokalen Speicher in den entfernten Speicher.

8. Verfahren nach Anspruch 1, bei dem der Bestimmungsschritt c), wenn die seismischen Vorstapel-Eingangsdaten Spurdaten enthalten, für jeden Eingangsknoten die folgenden Schritte enthält:
Bestimmen des kleinsten, individuellen rechtwinkligen Begrenzungskastens, der die Elementarvolumina für jede in den Eingangsknoten geladene Spur-Überdeckung umschließt, und
Vereinigen sämtlicher Begrenzungskästen, um den kleinsten vereinigten Begrenzungskasten zu erzeugen, der sämtliche individuellen Begrenzungskästen umschließt.

9. Verfahren nach Anspruch 1, bei dem der Zuweisungsschritt e) die folgenden Unterschritte enthält:
Unterteilen des seismischen Plans in Bereiche aneinandergrenzender Blöcke aus Elementarvolumina,
Unterteilen jedes Blocks in mehrere Unterblöcke, wobei die Anzahl der Unterblöcke gleich der Anzahl der Operatorknoten ist und die Spurüberdeckung in jedem Unterblock ungefähr gleich ist.

10. System zum Verarbeiten von seismischen Vorstapel-Daten, welches
einen Multiprozessor-Computer mit mehreren Prozessoreinrichtungen, wovon jede einen Schreib-Lese-Speicher und wenigstens einen Mikroprozessor enthält;
ein skalierbares Plattenspeichersystem, das die seismischen Vorstapel-Daten enthält; und
ein Daten- und Steuerungs-Kommunikationsnetz, das die Verarbeitungseinrichtungen und das Plattenspeichersystem mit dem Computer verbindet, umfaßt,
wobei die Verarbeitungseinrichtungen Eingangs- und Operatorknoten besitzen, wobei die Eingangsknoten so betreibbar sind, daß sie seismische Vorstapel-Daten in den Schreib-Lese-Speicher einlesen, die Überdeckung der seismischen Daten in einem entsprechenden Eingangsknoten bestimmen und die Überdeckung über das Kommunikationsnetz den Operatorknoten übermitteln,
wobei jeder Operatorknoten einem Bereich der Überdeckung zuweisbar ist und so betreibbar ist, daß er seismische Daten von Eingangsknoten, die auf den Bereich der Überdeckung bezogene Daten besitzen, anfordert und empfängt und die empfangenen Daten verarbeitet.

## Revendications

1. Procédé pour assigner des données d'entrée sismiques pré-empilage, résultant d'une étude sismique, à certains noeuds de traitement d'un ordinateur multiprocesseur muni d'une mémoire éloignée et d'une mémoire locale, comportant les étapes consistant à :
a) diviser les noeuds de traitement en une pluralité de noeuds d'entrée et de noeuds opérateurs ;
b) transférer des données d'entrée sismiques pré-empilage à partir d'une mémoire éloignée vers la mémoire locale de noeuds d'entrée ;
c) déterminer la couverture des données d'entrée sismiques pré-empilage associées à chaque case lors de l'étude sismique ;
d) diffuser la couverture, au moins, aux noeuds de traitement opérateurs ; et
e) assigner des zones de la couverture aux noeuds de traitement opérateurs.

2. Procédé selon la revendication 1, comportant les étapes consistant à :
pour chaque noeud opérateur, demander et recevoir des données sismiques pré-empilage,
pour une zone assignée, à partir d'un noeud d'entrée en possession des données sismiques;
traiter les données sismiques reçues.

3. Procédé selon la revendication 1, dans lequel ladite couverture comprend une région délimitée de la terre subdivisée en un réseau de cases.

4. Procédé selon la revendication 3, dans lequel lesdites zones comportent une ou plusieurs cases de ladite couverture.

5. Procédé selon la revendication 3, dans lequel ladite étape d'assignation e) comporte l'assignation séquentielle à un noeud opérateur d'une zone spatialement contiguë à une zone assignée précédente.

6. Procédé selon la revendication 1, dans lequel l'étape e) comporte l'assignation de zones de ladite couverture qui sont généralement identiques en vue d'un traitement équilibré de la charge.

7. Procédé selon la revendication 1, comportant, pour un certain nombre de noeuds opérateurs, les étapes consistant à :
f) pour chaque noeud opérateur, transférer des données sismiques post-empilage, pour les zones qui lui sont assignées, à partir d'une mémoire éloignée vers sa mémoire locale ;
g) pour chaque noeud opérateur, transférer vers sa mémoire locale la couverture de données pré-empilage qui lui est assignée à partir de la mémoire locale d'un noeud d'entrée;
h) pour chaque noeud opérateur, appliquer une opération de migration DMO ("Dip MoveOut") sur sa couverture pré-empilage et actualiser ses données post-empilage; et
i) pour chaque noeud opérateur, transférer ses données post-empilage actualisées depuis sa mémoire locale vers la mémoire éloignée.

8. Procédé selon la revendication 1, dans lequel les données d'entrée sismiques pré-empilage comprennent des données de trace dans ladite étape de détermination c), pour chaque noeud d'entrée, comporte les étapes consistant à :
déterminer la boîte circonscrite rectangulaire individuelle la plus petite contenant les cases de chaque couverture de trace chargée sur le noeud d'entrée, et réunir toutes les boîtes circonscrites pour créer la boîte circonscrite réunie la plus petite contenant toutes les boites circonscrites individuelles.

9. Procédé selon la revendication 1, dans lequel l'étape d'assignation e) comporte les sous-étapes consistant à :
diviser l'étude sismique en zones constituées de blocs contigus de cases,
subdiviser chaque bloc en une pluralité de sous-blocs, le nombre de sous-blocs étant égal au nombre de noeuds opérateurs et la couverture de trace dans chaque sous-bloc étant approximativement la même.

10. Système pour traiter des données sismiques pré-empilage comportant :
un ordinateur multiprocesseur comportant une pluralité de moyens de traitement, chaque moyen de traitement comportant une mémoire à accès aléatoire et au moins un microprocesseur ;
un système de mémorisation sur disque redimensionnable contenant les données sismiques pré-empilage ; et
un réseau de communications de données et de commande reliant les moyens de traitement et le système de mémorisation sur disque à l'ordinateur ;
lesdits moyens de traitement comportant des noeuds d'entrée et des noeuds opérateurs, lesdits noeuds d'entrée pouvant - transférer des données sismiques pré-empilage dans la mémoire à accès aléatoire, déterminer la couverture des données sismiques dans un noeud d'entrée respectif, et communiquer ladite couverture via le réseau de communications auxdits noeuds opérateurs,
chaque noeud opérateur pouvant être assigné à une zone de couverture et pouvant - demander et recevoir des données sismiques à partir de noeuds d'entrée ayant des données qui correspondent à ladite zone de couverture, et traiter les données reçues.
